# EUROPÄISCHE PATENTSCHRIFT

(11) **EP 4 357 276 B1**
(45) Veröffentlichungstag und Bekanntmachung des Hinweises auf die Patenterteilung: **27.08.2025**
(21) Anmeldenummer: 23203463.7
(22) Anmeldetag: 13.10.2023
(51) Int. Cl.: B65G 53/56

(54) **WEICHE FÜR EINE EINRICHTUNG ZUR FÖRDERUNG UND/ODER ZUM TRANSPORT VON MATERIALIEN**
SWITCH FOR A DEVICE FOR CONVEYING AND/OR TRANSPORTING MATERIALS
AIGUILLAGE POUR UN DISPOSITIF DE TRANSPORT ET/OU DE TRANSPORT DE MATÉRIAUX

(30) Priorität: 17.10.2022 DE 102022127149
(43) Veröffentlichungstag der Anmeldung: 24.04.2024
(73) Patentinhaber: Koch, Werner, 75236 Kämpfelbach (DE)
(72) Erfinder: Koch, Werner, 75236 Kämpfelbach (DE)
(74) Vertreter: RPK Patenanwälte Reinhardt und Kaufmann Partnerschaft mbB (Pforzheim)

(56) Entgegenhaltungen:
- EP-B1- 1 590 280
- FR-A- 501 088
- US-A- 3 826 539

## Beschreibung

Die Erfindung betrifft eine Weiche für eine Einrichtung zur Förderung und/oder zum Transport von Materialien, insbesondere rieselfähiger Schuttgütter, rieselfähiger Schuttgütter von Gries- bis Körnergröße, Granulate, Kunststoffgranulate, granulierte Lebensmittel, Granulatkörner, Pulver, pulverige Materialien, PVC-Pulver, landwirtschaftliche Güter, Flüssigkeiten, Gase oder chemisch/pharmazeutische Produkte nach dem Oberbegriff des Anspruches 1.

In der Industrie müssen materialverarbeitende Maschinen in der Regel mit entsprechendem Material, z.B. rieselfähige Schuttgütter, rieselfähige Schuttgütter von Griesbis Körnergröße, Granulate, Kunststoffgranulate, granulierte Lebensmittel, Granulatkörner, Pulver, pulverige Materialien, PVC-Pulver, landwirtschaftliche Güter, Flüssigkeiten, Gase oder chemisch/pharmazeutische Produkte versorgt werden. Beispielsweise kann das Material per Hand nachgefüllt werden was jedoch sehr zeitintensiv und umständlich ist. In der Regel werden daher je nach Material Einrichtungen zur Förderung und/oder zum Transport von Materialien verwendet, wobei die Materialien beispielsweise mit einer Pumpe, einem Saug- oder Druckgebläse zur Maschine gefördert und/oder transportiert werden. Muss bei einer Maschine beispielsweise das verwendete Material gewechselt werden, werden im Stand der Technik dafür in der Regel Weichen oder sogenannte Kopplungsbahnhöfe verwendet, wobei die Rohrleitungen in der Regel in einem Rahmengestell untergebracht sind und die Anzahl der Eingänge sowie die Anzahl der Ausgänge je Eingang entsprechend dem Aufbau der Einrichtung festgelegt wird.

Im Stand der Technik findet sich, beispielsweise in der EP 3 670 403 A1, ein Kopplungsbahnhof, welcher mehrere Rohrleitungen mit angeordneten Kupplungsstücken sowie endseitig angeordneten Gegenkopplungsstücken aufweist.

Aus der DE 42 24 408 C1 ist eine Weiche für eine pneumatische Einrichtung zur Förderung rieselfähiger Schuttgüter bekannt, wobei mit einer Verschiebeplatte die Enden von Zuführ- und Ausgangsleitungen auf eine gemeinsame Verbindungsöffnung verschoben werden. Jeder Zuführleitung und jeder Ausgangsleitung ist eine Antriebseinheit zugeordnet, wodurch die einzelnen Leitungen einzeln gesteuert werden können.

Die DE 60 2004 007 622 T2 offenbart eine Verzweigung für einen pneumatischen Rohrtransport oder einen Rohrtransport von Flüssigkeiten. An einem zylindrischen Körper, der als ein Stator dient und einen Rotor aufweist sind mindestens sechs Rohranschlüsse angeordnet, wobei für ein selektive Verbindung von zwei Rohranschlüssen der Stator verlagert wird. Der Stator kann sechs Rohranschlüsse aufweisen, welche in einem gegenseitigen Radialabstand von 60 Grad angebracht sind. Der entsprechende Rotor weist Anschlussöffnungen mit Runden von 60 Grad, 120 Grad und 180 Grad auf. Weiter offenbart ist ein Stator mit acht Rohranschlüssen, die in einem gegenseitigen Radialabstand von 45 Grad angebracht sind sowie ein Stator mit acht Rohranschlüssen, von denen zwei in einem gegenseitigen Radialabstand von 180 Grad und die anderen in einem Radialabstand von 60 Grad, 90 Grad bzw. 120 Grad der ersten angesiedelt sind sowie entsprechende Rotoren. Eine Weiche für eine Einrichtung zur Förderung und/oder zum Transport von Materialien nach dem Oberbegriff des Anspruchs 1 ist aus DE 60 2004 007 622 T2 bekannt.

Die DE 10 2009 011 605 A1 betrifft eine Rohrweiche zum automatischen, wahlweisen Anschluss eines Verbindungsrohres an eines von wenigstens zwei Anschlussrohren, die jeweils ein Rohrende für eine Verbindung mit einem freien Ende des Verbindungsrohres aufweisen. Die Rohrweiche weist eine Verstellmechanik auf, mittels derer das freie Ende des Verbindungsrohres automatisch mindestens entlang zweier vordefinierter Verstelleinrichtungen verstellbar ist, um das freie Ende mit einem Rohrende eines Anschlussrohres zu verbinden.

Ausgehend von diesem Stand der Technik liegt der vorliegenden Erfindung die Aufgabe zugrunde, eine Weiche der eingangs genannten Gattung derart weiterzubilden, dass auf kleinstem Raum eine Vielzahl von Verbindungsmöglichkeiten geschaffen wird.

Diese Aufgabe wird durch eine Weiche mit den Merkmalen des Anspruches 1 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch Erläutern der Sachverhalte aus der Beschreibung und durch Details aus den Figuren ergänzt werden, wobei weitere Ausführungsvarianten der Erfindung aufgezeigt werden.

Für die Erläuterung der Erfindung werden zunächst folgende Begriffe wie folgt definiert:
Unter einer "Krümmung" wird in Bezug auf die Anmeldung verstanden, dass sich eine "Krümmung" auf den Krümmungsradius oder den Winkel zwischen den Eingangs- und den Ausgangsachsen der Rohre beziehen. Es kann sich dabei um einen spitzen, rechten oder stumpfen Winkel handeln. Ein geradliniges Rohr weist demnach ein Winkel von 180 Grad aber keine Krümmung auf.

Die Weiche für eine Einrichtung zur Förderung und/oder zum Transport von Materialien, z.B. rieselfähiger Schuttgütter, rieselfähiger Schuttgütter von Gries- bis Körnergröße, Granulate, Kunststoffgranulate, granulierte Lebensmittel, Granulatkörner, Pulver, pulverige Materialien, PVC-Pulver, landwirtschaftliche Güter, Flüssigkeiten, Gase oder chemisch/pharmazeutische Produkte, sowie für wenigstens eine selektive reversible Verbindung wenigstens einer Zuführleitung, bevorzugt wenigstens zweier Zuführleitungen, zum Beispiel einer Materialspeicherleitung oder einer Materialzuführleitung, mit wenigstens einer Ausgangsleitung, bevorzugt mit wenigstens zwei Ausgangsleitungen, zum Beispiel einer Maschinenleitung oder einer Verbraucherleitung, weist wenigstens einen zylindrischen Körper mit einer Vielzahl von Anschlüssen, der als ein Stator dient, sowie wenigstens einen damit zusammenwirkenden und darin aufgenommenen Rotor mit einer Vielzahl von Rohren auf, der drehbar gegenüber dem Stator ist. Beispielsweise kann es sich bei dem zylindrischen Körper der als Stator dient bzw. dem Rotor um ein Außen- bzw. Innenring handeln, z.B. aus Stahl. Die Anschlüsse sind radial um den zylindrischen Körper angeordnet, wobei die selektive reversible Verbindung der wenigstens einen Zuführleitung mit der wenigstens einen Ausgangsleitung durch ein Drehen des wenigstens einen Rotors erfolgt. Bei den Anschlüssen kann es sich beispielsweise um Anschlüsse für Rohre und/oder Schläuche handeln. Um vorteilhaft auf kleinstem Raum eine Vielzahl von Verbindungsmöglichkeiten zu realisieren, weist wenigstens ein Rohr über wenigstens einen Teil seiner Länge, einen vom Rest des Rohres unterschiedlichen Querschnitt auf. Bevorzugt können alle Rohre über wenigstens einen Teil ihrer Längen, einen vom Rest des jeweiligen Rohres unterschiedlichen Querschnitt aufweisen. Weiter vorteilhaft ist es so möglich eine große Vielzahl an Rohren und/oder Anschlüssen für die Weiche vorzusehen und in einer Stellung gleichzeitig mehrere Zuführ- und/oder Ausgangsleitungen zu bedienen, ohne dass eine Drehbewegung nötig ist. Weiter vorteilhaft werden somit bei einer kompakten Größe der Weiche auf kleinstem Platz eine große Anzahl an Zuführ- und/oder Ausgangsleitungen angefahren sowie mehrere Verbindungen gleichzeitig realisiert. Wird der Rotor gedreht kann beispielsweise eine Zuführleitung über einen Anschluss und ein Rohr mit einer Ausgangsleitung verbunden werden. Prinzipiell ist es jedoch auch möglich die Leitungen untereinander zu verbinden, beispielsweise eine Zuführleitung mit einer Zuführleitung, eine Ausgangsleitung mit einer Ausgangsleitung, eine Ausgangsleitung mit einer Zuführleitung oder umgekehrt. Ebenfalls ist es auch möglich eine Zuführleitung oder eine Ausgangsleitung mit einer Vielzahl an Ausgangsleitungen bzw. Zuführleitungen zu verbinden. Je nach Anzahl der verwendeten Rohre und Anschlüsse können somit vorteilhaft eine Vielzahl von Zuführ- und/oder Ausgangsleitungen gleichzeitig miteinander verbunden werden.

Bevorzugt kann die Einrichtung zur Förderung und/oder zum Transport von Materialien eine Saug- und/oder Druckförderungs-/Transporteinrichtung sein.

Bevorzugt weist der zylindrische Körper genauso viele Anschlüsse auf, wie es insgesamt Rohrein- und Rohrausgänge gibt. Beispielsweise kann die Weiche neun bzw. zehn Rohre und 18 bzw. 20 Anschlüsse aufweisen. Prinzipiell sind aber beliebige Kombinationen aus Rohren und Anschlüssen möglich.

Weiter bevorzugt können die Rohre in einer Ebene im Rotor angeordnet sein. Vorteilhaft erlaubt dies eine sehr kompakte Anordnung der Rohre für eine Platzersparnis.

Weiter bevorzugt können die Rohre unsymmetrisch um eine Achse, welche beispielsweise entlang eines Durchmessers des Rotors verläuft angeordnet werden, wodurch vorteilhaft alle Anschlüsse beliebig untereinander verbunden werden können.

Bei dem zylindrischen Körper, dem Stator, den Anschlüssen, dem Rotor und/oder den Rohren kann es sich bevorzugt um ein einteiliges Teil handeln, beispielsweise um ein Gussteil. Beispielsweise kann der Rotor mit den Rohren als ein Gussteil gefertigt sein. Auch kann z.B. der zylindrische Körper mit den Anschlüssen als ein Gussteil gefertigt sein. Genauso können auch die Rohre im Innern des Rotors aus einem Teil sein, z.B. aus einem Gussteil, welches an den Rotor befestigt wird.

Weiter bevorzugt kann wenigstens eine Dichtung zwischen dem Rotor und dem Stator vorgesehen sein, welche die Anschlüsse und die Rohre bzw. die Rohrein- und Rohrausgänge gegeneinander abdichten. Beispielsweise kann pro Anschluss eine Dichtung vorgesehen sein.

Um vorteilhaft möglichst viele Rohre innerhalb des Rotors anzuordnen und somit die Produktivität zu steigern, ist bevorzugt wenigstens ein Rohr wenigstens teilweise gekrümmt. Beispielsweise kann die Krümmung des Rohres bzgl. des Winkels zwischen Eingangs- und Ausgangsachse des Rohres einen stumpfen, rechten oder spitzen Winkel aufweisen. Weiter vorteilhaft ergibt sich so eine weitere Platzeinsparung was zu einer kleinen und kompakten Bauweise der Weiche führt.

Bevorzugt unterscheidet sich der Querschnitt in einem mittleren Bereich des wenigstens einen Rohres vom Rest des wenigstens einen Rohres. Beispielsweise kann es sich bei den Enden des Rohres um den gleichen Querschnitt handeln, wie der Querschnitt der Anschlüsse, z.B. um einen runden Querschnitt, während der Querschnitt der Rohre im mittleren Bereich beispielsweise einen ovalen Querschnitt aufweist.

Vorteilhaft kann so der Platz im Rotor optimal ausgenutzt werden, sodass eine große Anzahl an Rohren verwendet werden kann und somit mehr Verbindungen realisiert werden können.

Bevorzugt kann der unterschiedliche Querschnitt des wenigstens einen Rohres ein ovaler oder ein elliptischer Querschnitt sein. Beispielsweise ist es bei einem gekrümmten Rohr, welches einen Bogen beschreibt, aufgrund des Verhaltens des Materials im Bogen so, dass das Material an die Außenfläche des Bogens gedrückt wird und nicht an die Innenfläche des Bogens. Vorteilhaft kann bei einem ovalen oder einem elliptischen Querschnitt des Rohres die fehlende Luftmenge im ovalen oder elliptischen Bereich ohne Widerstände durchfließen. Ebenfalls vorteilhaft wird verhindert, dass sich an bestimmten Stellen im Rohr, z.B. an Totstellen oder in Totecken Material ansammelt, welches z.B. bei einem Materialwechsel zu Verunreinigungen führen kann.

Um vorteilhaft eine möglichst flexible Anordnung der Rohre zu erreichen, erstreckt sich bevorzugt der mittlere Bereich des wenigstens einen Rohres ausgehend von der Mitte des wenigstens einen Rohres um eine Strecke im Wesentlichen von 0 bis 50%, bevorzugt 10 bis 30%, weiter bevorzugt 20% bezogen auf die Länge des wenigstens einen Rohres hin zu den jeweiligen Enden des wenigstens einen Rohres. Beispielsweise ist es denkbar, dass die "mittigen" 0 bis 80%, z.B. 80, 70, 60, 50, 40, 30, 20, 10% der Länge des Rohres im Rotor den mittleren Bereich darstellen. Prinzipiell sind jedoch auch weitere beliebige Strecken und Größen des mittleren Bereichs denkbar.

Bevorzugt kann der Querschnitt im mittleren Bereich des wenigstens einen Rohres einen fließenden Übergang hin zu dem Querschnitt an den Enden des wenigsten einen Rohres aufweisen.

Bevorzugt weisen die Rohre zu ihren Enden im Rotor hin den gleichen Querschnitt wie die Anschlüsse des Stators auf, z.B. einen standardisierten Querschnitt, wie beispielsweise einen runden Querschnitt. Vorteilhaft ergibt sich so ein hoher Materialdurchsatz.

Für einen vorteilhaft hohen Materialdurchsatz bei gleichzeitig kompakter Bauweise der Weiche ist bevorzugt die Breite des wenigstens einen Rohres im mittleren Bereich des wenigstens einen Rohres kleiner als an den Enden des wenigstens einen Rohres. Unter der Breite ist der kürzeste Abstand zwischen gegenüberliegenden Rohrwänden, welcher durch den Mittelpunkt des Rohrs geht, zu verstehen. Weiter vorteilhaft kann sich so auch weniger Material an bestimmten Stellen im Innern der Rohre, beispielsweise in Totstellen oder Totecken, ansammeln, was beispielsweise bei einem Materialwechsel zu Verunreinigungen führen kann.

In der Praxis zeigt sich, dass aufgrund der Zentrifugalkraft Material, welches, z.B. mit einer Pumpe, einem Saug- oder Druckgebläse durch die Rohre gefördert und/oder transportiert wird, an eine Seite der Wand des Rohres gedrückt wird, während die gegenüberliegende Seite der Wand des Rohres so gut wir gar nicht beansprucht wird. Um vorteilhaft weiter Platz einzusparen ist bevorzugt der Querschnitt im mittleren Bereich des wenigstens einen Rohres ein ovaler oder ein elliptischer Querschnitt.

Bevorzugt ist die Querschnittsfläche des wenigstens einen Rohres über die gesamte Länge des Rohres gleich groß, wodurch vorteilhaft der gleiche Materialdurchsatz bei einer kompakten Bauweise der Weiche erreicht wird. Beispielsweise ist bei einem Rohr mit 60 mm Durchmesser die ovale Fläche mittig auf 30 mm und in der großen Fläche bei 90 mm. So kann hier bis zu 50% an Fläche eingespart werden und somit hohe Kosten durch eine kleine Weiche eingespart werden.

Um vorteilhaft möglichst viele Verbindungen zwischen Zuführ- und/oder Ausgangsleitungen herzustellen, sind bevorzugt die Rohre innerhalb des Rotors in einer Ebene so nebeneinander angeordnet, dass das Rohr mit einer geringsten Krümmung, bevorzugt mit keiner bzw. einer Krümmung von null, z.B. ein geradliniges Rohr im Wesentlichen entlang eines Durchmessers des Rotors verläuft, und die Krümmung der anderen Rohre mit dem Abstand zu dem Rohr der geringsten Krümmung zunimmt. Beispielsweise kann ein geradliniges Rohr (keine Krümmung) entlang des Durchmessers in der Mitte des Rotors verlaufen, während die anderen Rohre eine von der Mitte aus nach beiden Seiten weg von dem geradlinigen Rohr zunehmende Krümmung aufweisen. Das Rohr, welches beispielsweise den größten Abstand zu dem Rohr mit der geringsten Krümmung aufweist, weist die größte Krümmung auf. Hingegen weist beispielsweise das zu dem Rohr mit der geringsten Krümmung benachbarte Rohr lediglich eine kleine Krümmung auf. Vorteilhaft kann so der Raum innerhalb des Rotors optimal ausgenutzt werden um eine möglichst große Anzahl an Rohren darin anzuordnen.

Um vorteilhaft das gesamte Volumen des Rotors auszunutzen, ist bevorzugt wenigstens ein weiteres Rohr vorgesehen. Weiter bevorzugt ist das wenigstens eine weitere Rohr senkrecht zu dem Rohr mit der geringsten Krümmung angeordnet. Beispielsweise kann das weitere Rohr etwas versetzt über oder unter dem Rohr mit der geringsten Krümmung angeordnet sein. Weiter bevorzugt kann das wenigstens eine weitere Rohr, wie das wenigstens eine Rohr auch, über wenigstens einen Teil seiner Länge, einen vom Rest des weiteren Rohres unterschiedlichen Querschnitt aufweisen. Auch kann das wenigstens eine weitere Rohr gekrümmt sein.

Für eine vorteilhaft automatisierten Ablauf der Drehung sowie der Förderung und/oder des Transports der Materialien ist bevorzugt ein Antrieb, z.B. ein Getriebemotor oder ein Schrittmotor zur Drehung des Rotors vorgesehen. Beispielsweise kann es sich bei dem Antrieb auch um einen programmierbaren Motor handeln, welcher den Rotor je nach Materialbedarf der entsprechenden Maschinen automatisch verdreht.

Bevorzugt kann zur Kontrolle wenigstens ein Sensor vorgesehen sein, welcher die korrekte Stellung der Weiche, des Stators und/oder des Rotors überprüft. Beispielsweise kann es sich bei dem Sensor um einem in der Weiche, im Rotor und/oder im Stator eingebauten Sensor handeln. Beispielsweise können Sensoren an jedem Anschluss vorgesehen sein, welche überprüfen, ob das "richtige" Rohr an den Anschluss angeschlossen ist.

Weiter bevorzugt können auch mehrere Weichen hintereinander geschaltet werden, wodurch vorteilhaft eine sehr große Anzahl an Verbindungsmöglichkeiten geschaffen wird. Beispielsweise können zwei oder mehr einzelne Weiche hintereinander geschalten werden um vorteilhaft eine "große" Weiche zu erhalten um vorteilhaft eine größere Anzahl an Verbindungsmöglichkeiten zu schaffen.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch Erläutern der Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:
- Figur 1: eine Draufsicht auf eine Weiche,
- Figur 2: eine Draufsicht auf eine Weiche, mit gedrehtem Rotor,
- Figur 3: einen Schnitt entlang der Achse a-a aus Figur 1,
- Figur 4: einen Schnitt entlang der Achse b-b aus Figur 1,
- Figur 5: eine Ansicht von unten auf eine Weiche,

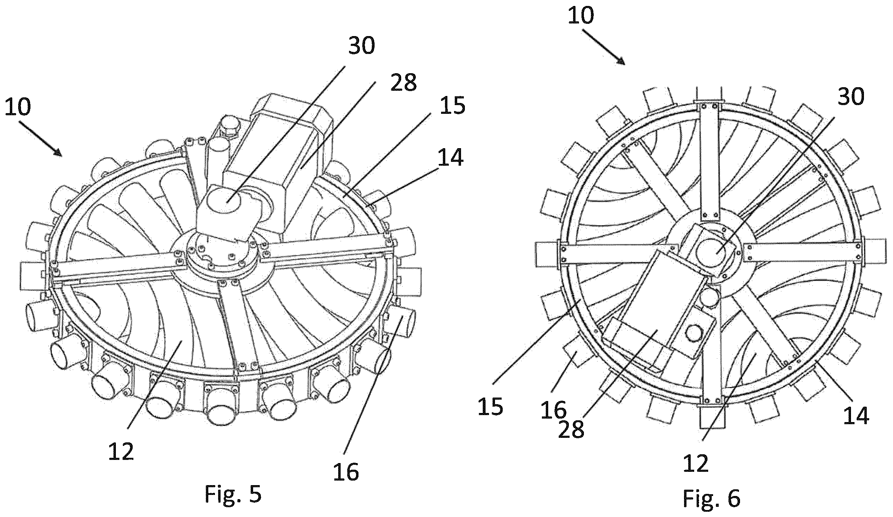

- Figur 5: eine perspektivische Ansicht einer Weiche,
- Figur 6: eine Draufsicht auf die Weiche aus Figur 5,

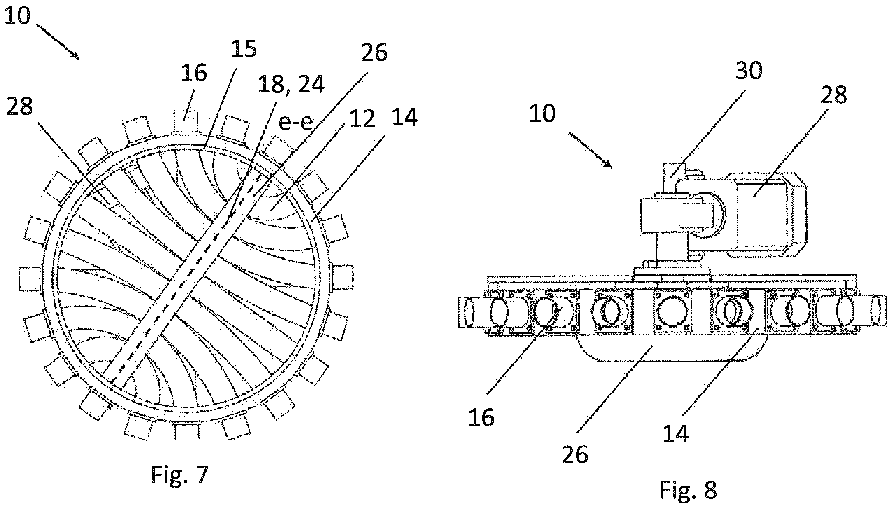

- Figur 7: eine Ansicht von unten auf die Weiche aus Figur 5,
- Figur 8: eine Ansicht von der Seite auf die Weiche aus Figur 5,

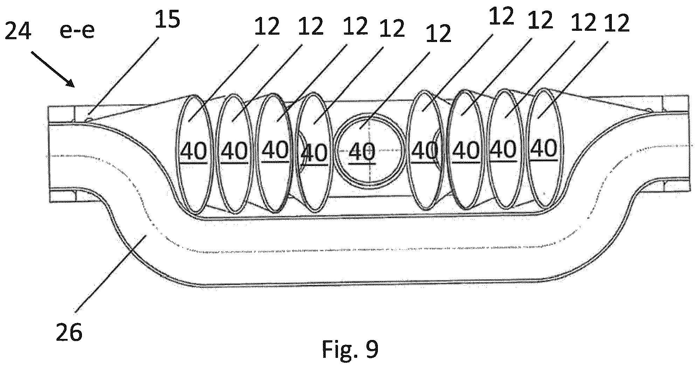

- Figur 9: einen Schnitt entlang der Achse e-e aus Figur 7,

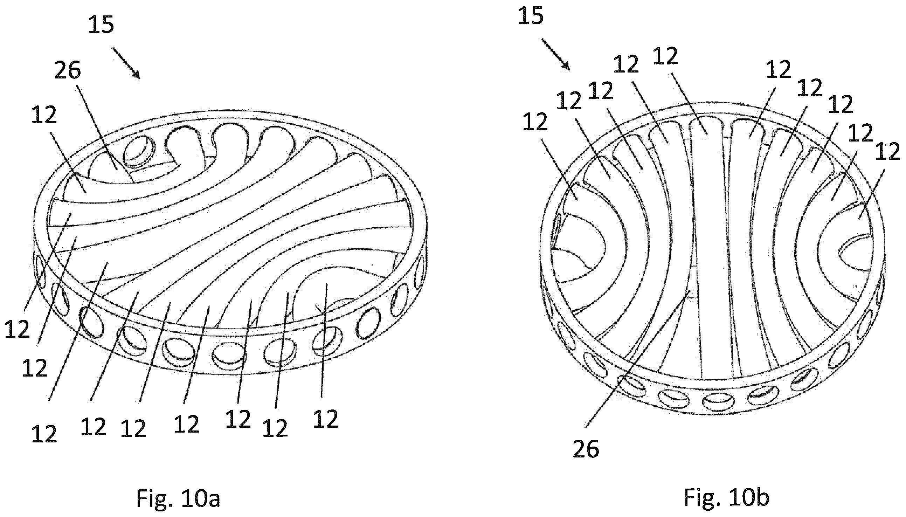

- Figur 10a: eine perspektivische Ansicht eines Rotors,
- Figur 10b: eine perspektivische Ansicht des Rotors aus Figur 10a,

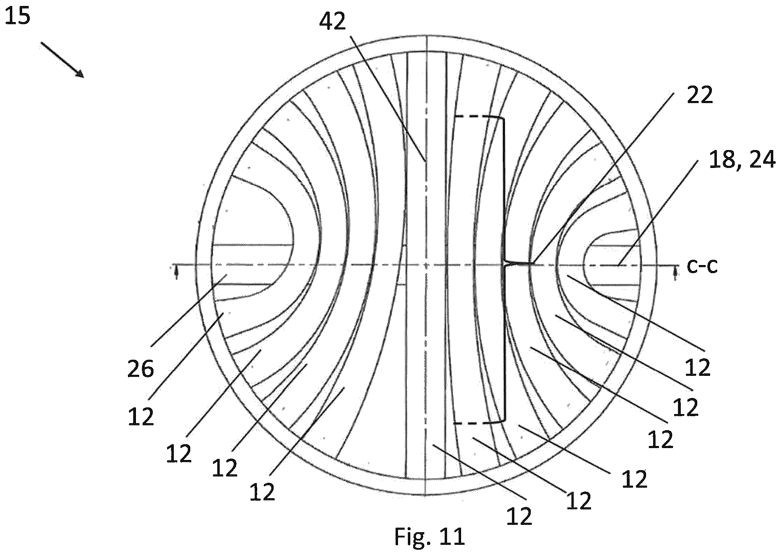

- Figur 11: eine Draufsicht auf den Rotor aus Figur 10a,

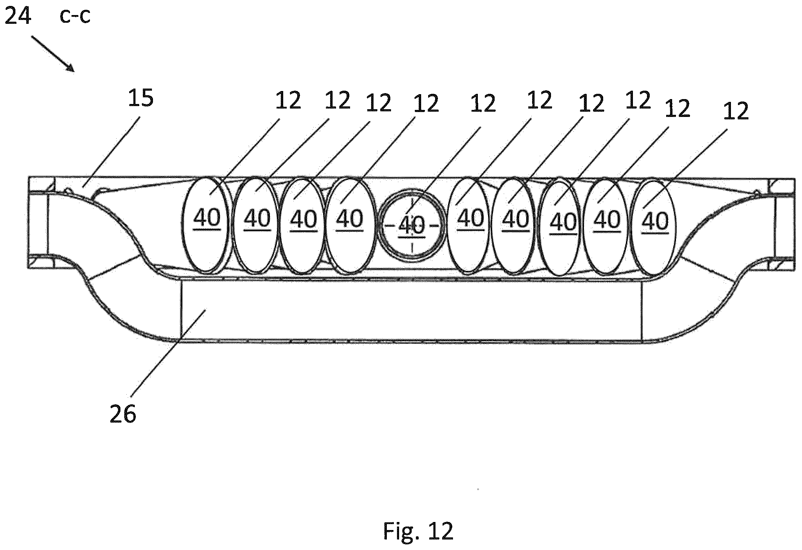

- Figur 12: einen Schnitt entlang der Achse c-c aus Figur 11,

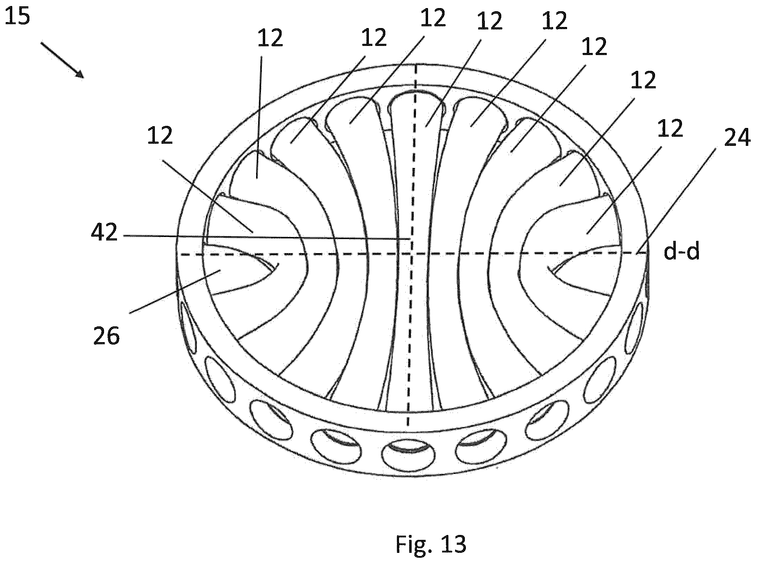

- Figur 13: eine perspektivische Ansicht eines Rotors,

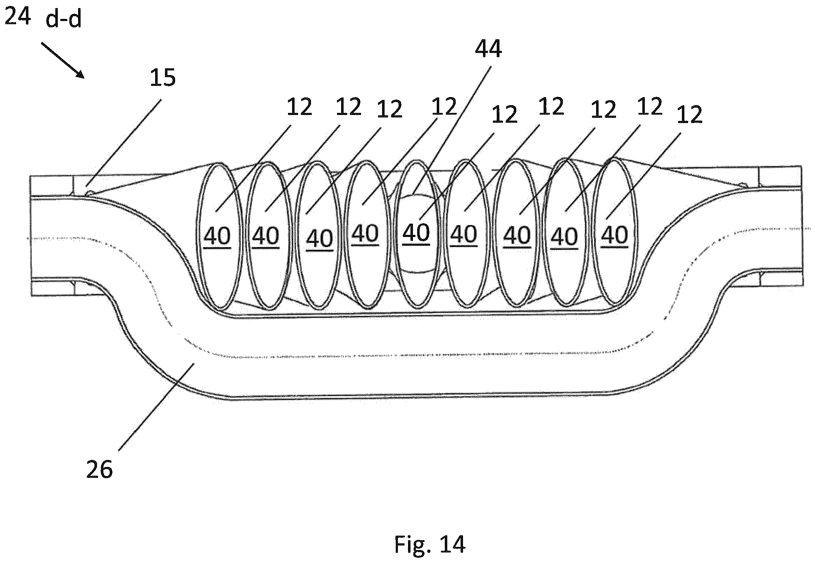

- Figur 14: einen Schnitt entlang der Achse d-d aus Figur 13,

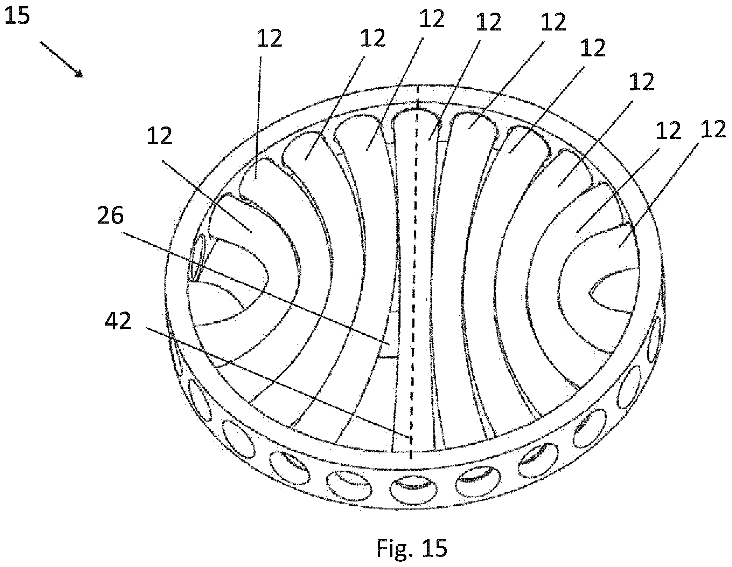

- Figur 15: eine perspektivische Ansicht eines Rotors,

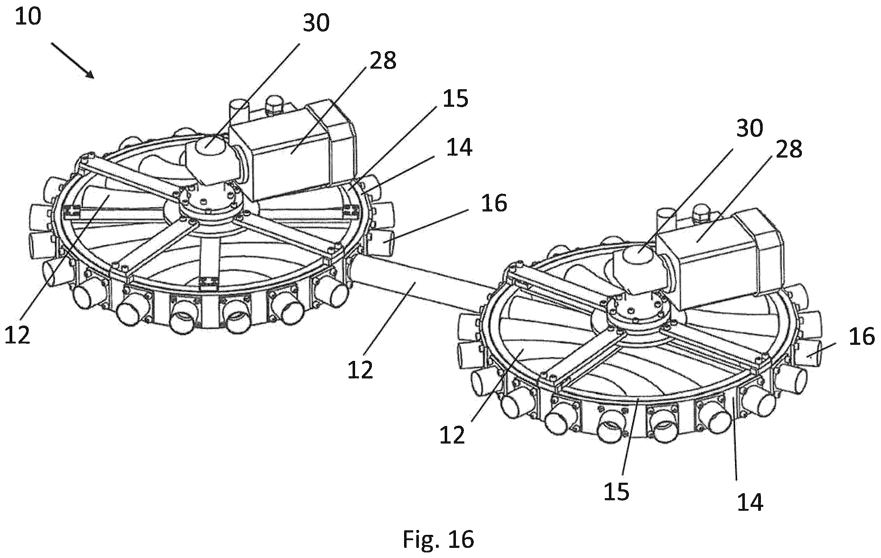

- Figur 16: eine Weiche.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

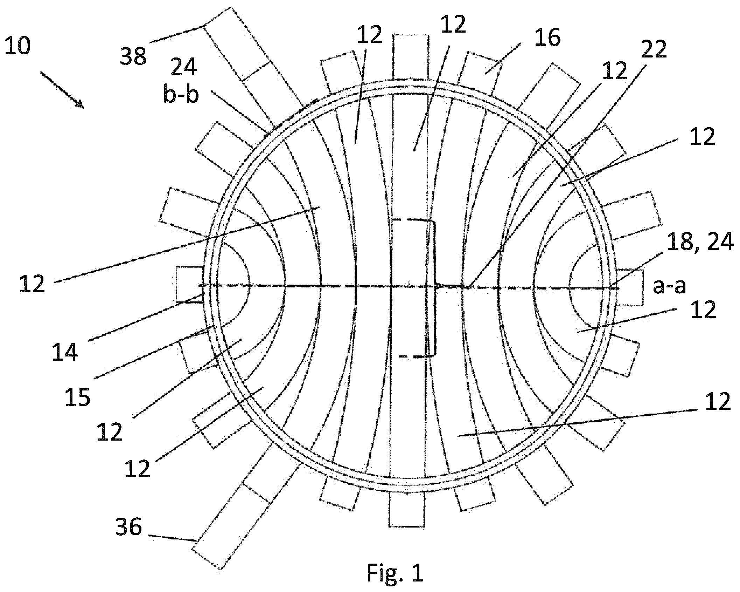

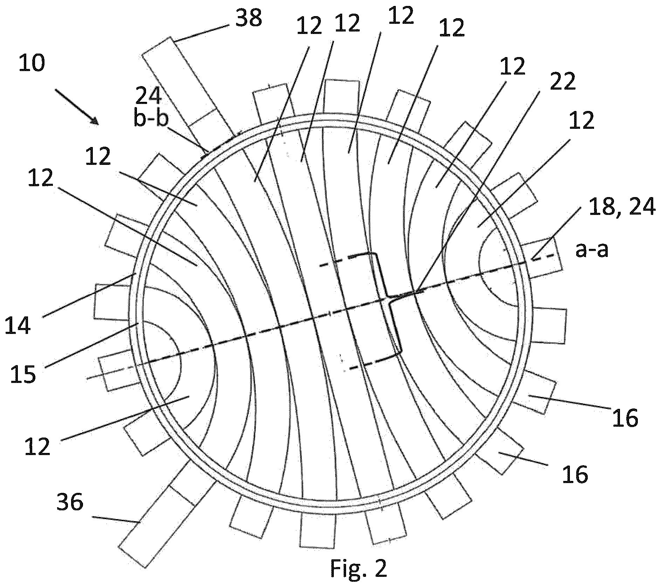

Figur 1 zeigt eine Weiche 10 für eine Einrichtung zur Förderung und/oder zum Transport von Materialien, z.B. rieselfähiger Schuttgütter, rieselfähiger Schuttgütter von Gries- bis Körnergröße, Granulate, Kunststoffgranulate, granulierte Lebensmittel, Granulatkörner, Pulver, pulverige Materialien, PVC-Pulver, landwirtschaftliche Güter, Flüssigkeiten, Gase oder chemisch/pharmazeutische Produkte, für wenigstens eine selektive reversible Verbindung wenigstens einer Zuführleitung 36, bevorzugt wenigstens zweier Zuführleitungen 36, zum Beispiel einer Materialspeicherleitung oder einer Materialzuführleitung mit wenigstens einer Ausgangsleitung 38, bevorzugt mit wenigstens zwei Ausgangsleitungen 38, zum Beispiel einer Maschinenleitung oder einer Verbraucherleitung, welche wenigstens einen zylindrischen Körper 14 mit einer Vielzahl von Anschlüssen 16, der als ein Stator dient, sowie wenigstens einen damit zusammenwirkenden und darin aufgenommenen Rotor 15 mit einer Vielzahl von Rohren 12 aufweist. Beispielsweise kann es sich bei dem zylindrischen Körper 14 der als Stator dient bzw. dem Rotor 15 um ein Außen- bzw. Innenring handeln, z.B. aus Stahl. Bei der Zuführleitung 36 und/oder der Ausgangsleitung 38 kann es sich beispielsweise um ein Rohr oder einen Schlauch handeln, welches von einem Materialspeicher kommt bzw. zu einer Maschine führt. Die Anschlüsse 16 sind radial um den zylindrischen Körper 14 angeordnet, wobei die selektive reversible Verbindung der wenigstens einen Zuführleitung 36 mit der wenigstens einen Ausgangsleitung 38 durch ein Drehen des Rotors 15 erfolgt. Der Rotor 15 kann beispielsweise mit oder gegen den Uhrzeigersinn, um wenigstens eine Drehachse 30 gedreht werden. Wird beispielsweise der Rotor 15 in Figur 1 um einen gewissen Winkel gegen den Uhrzeigersinn gedreht (Fig. 2) kann z.B. die Zuführleitung 36 und die Ausgangsleitung 38 über jeweils ein anderes Rohr 12 mit einer anderen Zuführleitung 36 bzw. Ausgangsleitung 38 verbunden werden. Insgesamt können so verschiedene Kombinationen bzw. Verbindungen von Zuführleitungen 36 und Ausgangsleitungen 38 realisiert werden. Um vorteilhaft auf kleinstem Raum eine Vielzahl von Verbindungsmöglichkeiten zu schaffen weist wenigstens ein Rohr 12 über wenigstens einen Teil seiner Länge einen vom Rest des Rohres 12 unterschiedlichen Querschnitt auf.

Zwischen dem Rotor 15 und dem Stator kann in einem weiteren bevorzugten Ausführungsbeispiel wenigstens eine Dichtung 17 zum Abdichten der Rohre 12 bzgl. der Anschlüsse 16 angeordnet sein. Beispielsweise kann jedem Anschluss 16 eine entsprechende Dichtung 17 zugeordnet sein.

In einem weiteren bevorzugten Ausführungsbeispiel gemäß den Figuren 1 und 2 ist wenigstens ein Rohr 12 wenigstens teilweise gekrümmt. In den Figuren 1 und 2 sind beispielsweise alle Rohre 12 bis auf das Rohr 12 in der Mitte gekrümmt.

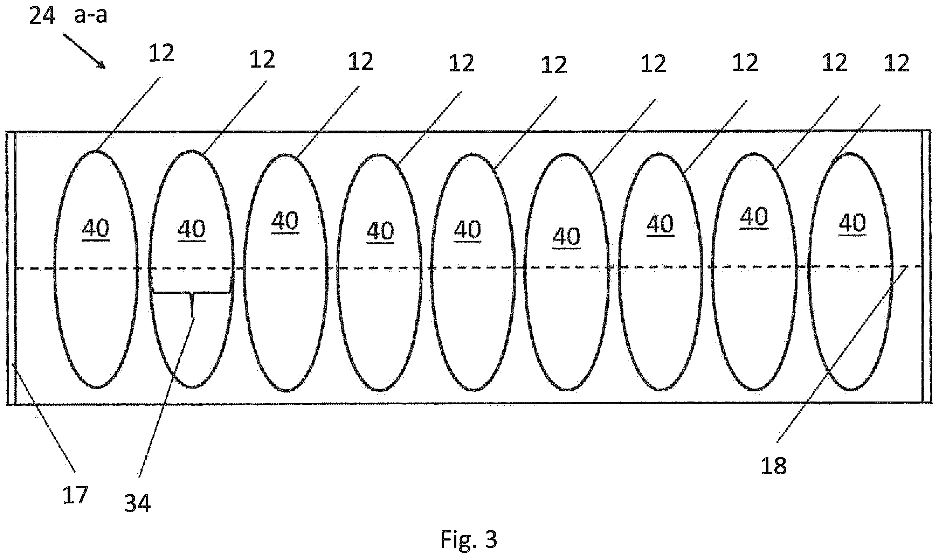

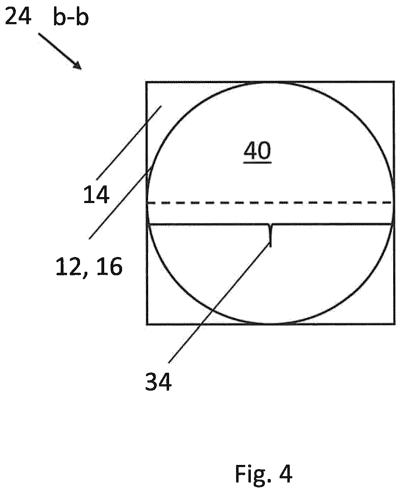

In einem weiteren bevorzugten Ausführungsbeispiel unterscheidet sich der Querschnitt im mittleren Bereich 22 des wenigstens einen Rohres 12 vom Rest des wenigstens einen Rohres 12. In Figur 3 ist beispielsweise schematisch ein Schnitt 24 entlang der Achse a-a aus Figur 1 und in Figur 4 ist schematisch ein Schnitt 24 entlang der Achse b-b aus Figur 1 dargestellt. Der Schnitt 24 in Figur 3 zeigt die Querschnitte der Rohre 12 in den mittleren Bereichen 22 der Rohre 12, welche sich von dem Querschnitt des Rohres 12 und dem Querschnitt des Anschlusses 16 in Figur 4 unterscheiden.

In einem weiteren bevorzugten Ausführungsbeispiel gemäß Fig. 3 ist der unterschiedliche Querschnitt des wenigstens einen Rohres 12 ein ovaler oder ein elliptischer Querschnitt.

In einem weiteren bevorzugten Ausführungsbeispiel gemäß den Figuren 1 und 2 erstreckt sich der mittlere Bereich 22 des wenigstens einen Rohres 12 ausgehend von der Mitte des wenigstens einen Rohres 12 um jeweils eine Strecke im Wesentlichen von 0 bis 50%, bevorzugt 10 bis 30%, weiter bevorzugt 20% bezogen auf die Länge des wenigstens einen Rohres 12 hin zu den jeweiligen Enden des wenigstens einen Rohres 12. Beispielsweise kann der mittlere Bereich 22 eine Länge von 0 bis 80%, bevorzugt 20 bis 60%, weiter bevorzugt 40% der gesamten Länge des Rohres 12 aufweisen. Die gesamte Länge des mittleren Bereichs kann beispielsweise 10, 20, 30, 40, 50, 60, 70, 80 oder 90% der gesamten Länge des entsprechenden Rohres 12 aufweisen. Ist das Rohr 12 beispielweise 100mm lang, so kann der mittlere Bereich z.B. eine Länge von 10, 20, 30, 40, 50, 60, 70, 80 oder 90mm aufweisen. Prinzipiell sind jedoch beliebige Längen oder Strecken des mittleren Bereichs 22 möglich.

In einem weiteren Ausführungsbeispiel gemäß der Figuren 3 und 4 ist die Breite 34 des wenigstens einen Rohres 12 im mittleren Bereich 22 des wenigstens einen Rohres 12 (Fig. 3) kleiner als an den Enden des wenigstens einen Rohres 12 (Fig. 4). In den Figur 3 und 4 verläuft die Breite 34 z.B. in horizontaler Richtung parallel zu einem Durchmesser 18 des Rotors 15.

In einem weiteren bevorzugten Ausführungsbeispiel gemäß Figur 3 weisen alle Rohre 12 die gleiche Breite 34 im mittleren Bereich 22 und/oder an ihren jeweiligen Enden auf, was vorteilhaft eine einfache Herstellung der Rohre erlaubt. Weiter vorteilhaft erlaubt dies auch eine einfachere Herstellung der Rohre und/oder eine einfachere Herstellung einer Gussform für die Rohre.

In einem weiteren bevorzugten Ausführungsbeispiel gemäß Figur 3 ist der Querschnitt im mittleren Bereich 22 des wenigstens einen Rohres 12 ein ovaler oder ein elliptischer Querschnitt. Im Gegensatz dazu ist in Figur 4 der ein runder Querschnitt des wenigstens einen Rohres 12 dargestellt, welches über eine größere Breite 34 als die ovalen Rohre 12 in Figur 3 verfügt. Vorteilhaft können durch den ovalen oder elliptischen Querschnitt beispielsweise in Figur 3 die Rohre 12 dichter aneinander angeordnet werden, sodass eine große Anzahl an Verbindungsmöglichkeiten zwischen Zuführleitungen 36 und Ausgangsleitungen 38 bei geringem Platzbedarf der Weiche 10 realisiert werden können.

Vorteilhaft für einen gleichbleibenden Materialdurchsatz ist in einem weiteren bevorzugten Ausführungsbeispiel gemäß den Figuren 3 und 4 die Querschnittsfläche 40 des wenigstens einen Rohres 12 über die gesamte Länge des wenigstens einen Rohres 12 gleich groß.

In einem weiteren bevorzugten Ausführungsbeispiel gemäß den Figuren 1 und 2 sind die Rohre 12 innerhalb des Rotors 15 in einer Ebene so nebeneinander angeordnet, dass das Rohr 12 mit einer geringsten Krümmung im Wesentlichen entlang eines Durchmessers 18 des Rotors 15 verläuft und die Krümmung der anderen Rohre 12 mit dem Abstand zu dem Rohr 12 mit der geringsten Krümmung zunimmt. Beispielsweise weist das Rohr 12 in der Mitte des Rotors 15 gemäß Figur 1 keine Krümmung auf (bzw. ist als geradliniges Rohr ausgeführt), während die daneben angeordneten Rohre 12 entsprechend größer werdende Krümmungen jeweils nach außen hin aufweisen.

Die Figuren 5 bis 9 zeigen ein weiteres bevorzugtes Ausführungsbeispiel sowie verschiedene Ansichten einer Weiche 10, wobei jeweils wenigstens ein weiteres Rohr 26 vorgesehen ist, welches senkrecht zu dem Rohr 12 mit der geringsten Krümmung angeordnet ist. Figur 5 zeigt die Weiche 10 aus einer perspektivischen Ansicht von schräg oben. Figur 6 zeigt die Weiche 10 aus einer Draufsicht von oben. Figur 7 zeigt die Weiche aus einer Draufsicht von unten. Figur 8 zeigt die Weiche aus einer Ansicht von der Seite. Das wenigstens eine weitere Rohr 26 kann optional, separat (extra) und einzeln an dem Rotor 15 befestigt, z.B. angeschraubt werden. Das weitere Rohr 26 kann über oder unten den Rohren 12 angeordnet sein. Es ist auch möglich, dass die Rohre 12 und das wenigstens eine Rohr 26 aus einem Teil sind, z.B. aus einem Gussteil. Figur 9 zeigt einen Schnitt 24 entlang der Achse e-e aus Figur 7, wobei acht der neun Rohre 12 einen ovalen oder elliptischen Querschnitt, bevorzugt in einem mittleren Bereich 22, aufweisen. Das Rohr 12 in der Mitte weist einen runden Querschnitt in Figur 9 auf. Prinzipiell kann das Rohr 12 in der Mitte in einem weiteren bevorzugten Ausführungsbeispiel auch einen ovalen oder elliptischen Querschnitt, bevorzugt in einem mittleren Bereich 22, aufweisen. In einem weiteren bevorzugten Ausführungsbeispiel gemäß Figur 9 ist die Querschnittsfläche 40 der Rohre 12 über die gesamte Länge der jeweiligen Rohre 12 gleich groß.

In einem weiteren bevorzugten Ausführungsbeispiel gemäß Figur 7 ist eine Weiche 10 von unten dargestellt, wobei das weitere Rohr 26 senkrecht zu dem Rohr 12 mit der geringsten Krümmung angeordnet ist und keine Krümmung aufweist. Insgesamt weist die Weiche 10 in Figur 7 9 Rohre 12, ein weiteres Rohr 26 sowie 20 Anschlüsse auf.

In einem weiter bevorzugten Ausführungsbeispiel gemäß den Figuren 5 bis 9 ist wenigstens ein Antrieb 28 zur Drehung des Rotors 15 um eine Drehachse 30 vorgesehen. Beispielsweise kann es sich bei dem Antrieb 28 um einen Getriebemotor oder um einen Schrittmotor handeln.

In einem weiteren Ausführungsbeispiel gemäß den Figuren 10a, 10b und 11 ist ein Rotor 15 in verschiedenen Ansichten dargestellt, welcher beispielsweise mit der Weiche 10 und dem Stator beispielsweise aus den Figuren 1, 2, 5, 6, 7 und 8 verwendet werden kann. Die Figuren 10a und 10b zeigen den Rotor 15 aus einer perspektivischen Ansicht von schräg oben bzw. von oben. Figur 11 zeigt den Rotor 15 aus einer Draufsicht von oben. Der Rotor 15 gemäß den Figuren 10a, 10b und 11 weist insgesamt 10 Rohre 12 und ein weiteres Rohr 26 auf. Bei dem Rotor 15 gemäß den Figuren 10a, 10b und 11 sind die Rohre 12 unsymmetrisch um eine Achse 42 angeordnet, welche z.B. entlang eines Durchmessers 18 des Rotors verläuft wodurch vorteilhaft alle Anschlüsse 16 beliebig untereinander verbunden werden können. Weiter weisen in den Figuren 10a, 10b und 11 die Rohre 12 bis auf ein Rohr 12 eine Krümmung auf.

In Figur 12 ist ein Schnitt 24 entlang der Achse c-c aus Figur 11 dargestellt. Man erkennt die verschiedenen Querschnitte der einzelnen Rohre 12, wobei neun der zehn Rohre bevorzugt in dem mittleren Bereich 22 einen unterschiedlichen, bevorzugt ovalen oder elliptischen Querschnitt im Gegensatz zu den runden Querschnitten an den Enden der jeweiligen Rohre 12 gemäß Figur 10a oder 10b aufweisen.

In einem weiteren bevorzugten Ausführungsbeispiel gemäß Figur 13 ist ein Rotor 15 mit neun Rohren 12 und einem optionalen, weiteren Rohr 26 dargestellt. Acht der neun Rohre 12 weisen eine Krümmung auf, wobei das mittlere Rohr 12 geradlinig ist und keine Krümmung aufweist. Die Rohre 12 sind symmetrisch bzgl. einer Achse 42 angeordnet. Figur 14 stellt einen Schnitt 24 entlang der Achse d-d aus Figur 13 dar. Die Rohre 12 weisen in Figur 14 einen ovalen oder elliptischen Querschnitt, bevorzugt in einem mittleren Bereich 22, auf. Beim mittleren Rohr 12 in Figur 14 ist zu erkennen, dass das Rohr 12 in die Ebene hinein an einem Rohrausgang 44 bzw. in Richtung eines Anschlusses 16 einen runden Querschnitt aufweist. Der Rotor 15 gemäß Figur 13 kann mit einer entsprechenden Weiche 10 und/oder einem entsprechenden Stator beispielsweise aus den Figuren 1, 2, 5, 6, 7 oder 8 verwendet werden.

In einem weiteren bevorzugten Ausführungsbeispiel gemäß Figur 15 ist ein Rotor 15 mit 10 Rohren 12 und einem optionalen, weiteren Rohr 26 dargestellt. Die Rohre 12 des Rotors 15 sind unsymmetrisch bzgl. einer Achse 42 angeordnet. Der Rotor 15 gemäß Figur 15 kann ebenfalls mit einer entsprechenden Weiche 10 und/oder einem entsprechenden Stator beispielsweise aus den Figuren 1, 2, 5, 6, 7 oder 8 verwendet werden.

In einem weiteren Ausführungsbeispiel in Figur 16 ist eine Weiche 10 dargestellt, wobei die Weiche 10 in Figur 16 mehrere zylindrische Körper 14, Statoren und Rotoren 15 aufweist. Beispielsweise können für die Weiche 10 gemäß Figur 16 zwei Weichen 10 aus Figur 5 hintereinandergeschaltet werden, beispielsweise über ein Rohr 12. Prinzipiell können beliebig viele Weichen 10 hintereinandergeschaltet werden, wodurch sich vorteilhaft eine größere Anzahl an Verbindungsmöglichkeiten ergibt.

### Bezugszeichenliste

- 10: Weiche
- 12: Rohr
- 14: zylindrischer Körper
- 15: Rotor
- 16: Anschluss
- 17: Dichtung
- 18: Durchmesser
- 22: mittlerer Bereich
- 24: Schnitt
- 26: weiteres Rohr
- 28: Antrieb
- 30: Drehachse
- 32: Querschnitt
- 34: Breite
- 36: Zuführleitung
- 38: Ausgangsleitung
- 40: Querschnittsfläche
- 42: Achse
- 44: Rohrausgang

## Patentansprüche

1. Weiche (10) für eine Einrichtung zur Förderung und/oder zum Transport von Materialien, insbesondere rieselfähiger Schüttgüter, für wenigstens eine selektive reversible Verbindung wenigstens einer Zuführleitung (36) mit wenigstens einer Ausgangsleitung (38), welche wenigstens einen zylindrischen Körper (14) mit einer Vielzahl von Anschlüssen (16), der als ein Stator dient, sowie wenigstens einen damit zusammenwirkenden und darin aufgenommenen Rotor (15) mit einer Vielzahl an Rohren (12) aufweist, der drehbar gegenüber dem Stator ist, wobei die Anschlüsse (16) radial um den zylindrischen Körper (14) angeordnet sind, wobei die selektive reversible Verbindung der wenigstens einen Zuführleitung (36) mit der wenigstens einen Ausgangsleitung (38) durch ein Drehen des wenigstens einen Rotors (15) erfolgt,
**dadurch gekennzeichnet, dass** wenigstens ein Rohr (12) über wenigstens einen Teil seiner Länge einen vom Rest des Rohres (12) unterschiedlichen Querschnitt aufweist.

2. Weiche nach einem der vorhergehenden Ansprüche, **dadurch gekennzeichnet, dass** wenigstens ein Rohr (12) wenigstens teilweise gekrümmt ist.

3. Weiche nach Anspruch 1 oder 2, **dadurch gekennzeichnet, dass** sich der Querschnitt in einem mittleren Bereich (22) des wenigstens einen Rohres (12) vom Rest des wenigstens einen Rohres (12) unterscheidet.

4. Weiche nach einem der vorhergehenden Ansprüche, **dadurch gekennzeichnet, dass** der unterschiedliche Querschnitt des wenigstens einen Rohres (12) ein ovaler oder ein elliptischer Querschnitt ist.

5. Weiche nach Anspruch 3 oder 4, **dadurch gekennzeichnet, dass** sich der mittlere Bereich (22) des wenigstens einen Rohres (12) ausgehend von der Mitte des wenigstens einen Rohres (12) um jeweils eine Strecke im Wesentlichen von 0 bis 50 Prozent, bevorzugt 10 bis 30 Prozent, weiter bevorzugt 20 Prozent bezogen auf die Länge des wenigstens einen Rohres (12) hin zu den jeweiligen Enden des wenigstens einen Rohres (12) erstreckt.

6. Weiche nach einem der Ansprüche 3 bis 5, **dadurch gekennzeichnet, dass** die Breite (34) des wenigstens einen Rohres (12) im mittleren Bereich (22) des wenigstens einen Rohres (12) kleiner ist als an den Enden des wenigstens einen Rohres (12).

7. Weiche nach einem der Ansprüche 3 bis 6, **dadurch gekennzeichnet, dass** der Querschnitt im mittleren Bereich (22) des wenigstens einen Rohres (12) ein ovaler oder ein elliptischer Querschnitt ist.

8. Weiche nach einem der vorhergehenden Ansprüche, **dadurch gekennzeichnet, dass** die Querschnittsfläche (40) des wenigstens einen Rohres (12) über die gesamte Länge des wenigstens einen Rohres (12) gleich groß ist.

9. Weiche nach einem der vorhergehenden Ansprüche, **dadurch gekennzeichnet, dass** die Rohre (12) innerhalb des Rotors (15) in einer Ebene so nebeneinander angeordnet sind, dass das Rohr (12) mit einer geringsten Krümmung im Wesentlichen entlang eines Durchmessers (18) des Rotors (15) verläuft und die Krümmung der anderen Rohre (12) mit dem Abstand zu dem Rohr (12) mit der geringsten Krümmung zunimmt.

10. Weiche nach einem der Ansprüche 2 bis 9, **dadurch gekennzeichnet, dass** wenigstens ein weiteres Rohr (26) vorgesehen ist, welches senkrecht zu dem Rohr (12) mit der geringsten Krümmung angeordnet ist.

11. Weiche nach einem der vorhergehenden Ansprüche, **dadurch gekennzeichnet, dass** wenigstens ein Antrieb (28) zur Drehung des Rotors (15) vorgesehen ist.

## Claims

1. A switch (10) for a device for conveying and/or transporting materials, in particular granulated bulk materials, for at least one selective reversable connection between at least one supply line (36) with at least one outlet line (38), which comprises at least one cylindrical body (14) which has a multiplicity of connections (16) and serves as a stator, as well as at least one rotor (15) which co-operates with the stator and is accommodated therein and which has a multiplicity of tubes (12), the rotor being rotatable relative to the stator, wherein the connections (16) are arranged radially around the cylindrical body (14), wherein the selective reversible connection of the at least one supply line (36) with the at least one outlet line (38) results from a rotation of the at least one rotor (15),
**characterised in that** at least one tube (12), over at least a part of its length, comprises a differing cross section from the remainder of the tube (12).

2. A switch according to any of the preceding claims, **characterised in that** at least one tube (12) is at least partially curved.

3. A switch according to claim 1 or 2, **characterised in that** the cross section in a middle region (22) of the at least one tube (12) differs from the remainder of the at least one tube (12).

4. A switch according to any of the preceding claims, **characterised in that** the differing cross section of the at least one tube (12) is an oval or elliptical cross section.

5. A switch according to claim 3 or 4, **characterised in that** the middle region (22) of the at least one tube (12) starting from the middle of the at least one tube (12) extends to the respective ends of the at least one tube (12) by a respective extent of substantially 0 to 50 percent, preferably 10 to 30 percent, further preferably 20 percent related to the length of the at least one tube (12).

6. A switch according to any of claims 3 to 5, **characterised in that** the width (34) of the least one tube (12) in the middle region (22) of the at least one tube (12) is smaller than at the ends of the at least one tube (12).

7. A switch according to any of claims 3 to 6, **characterised in that** the cross section in the middle region (22) of the at least one tube (12) is an oval or elliptical cross section.

8. A switch according to any of the preceding claims, **characterised in that** the cross sectional area (40) of the at least one tube (12) is of the same size over the entire length of the at least one tube (12).

9. A switch according to any of the preceding claims, **characterised in that** the tubes (12) inside the rotor (15) are arranged in a plane adjacent to each other such that the tube (12) with a smallest curvature runs essentially along a diameter (18) of the rotor (15) and the curvature of the other tubes (12) increases with the spacing relative to the tube (12) with the smallest curvature.

10. A switch according to any of claims 2 to 9, **characterised in that** there is provided at least one further tube (26) which is arranged perpendicular to the tube (12) with the smallest curvature.

11. A switch according to any of the preceding claims, **characterised in that** there is provided at least one drive (28) for rotating the rotor (15).

## Revendications

1. Aiguillage (10) pour un dispositif de convoyage et/ou transport de matériaux, en particulier de produits en vrac à écoulement libre, pour au moins une liaison réversible sélective d'au moins une conduite d'alimentation (36) avec au moins une conduite de sortie (38), laquelle présente au moins un corps cylindrique (14) ayant une pluralité de raccords (16) et servant de stator, ainsi qu'au moins un rotor (15) coopérant avec ce stator et logé à l'intérieur avec une pluralité de tubes (12) et qui est tournant par rapport au stator, les raccords (16) étant disposés radialement autour du corps cylindrique (14), la liaison réversible sélective de la ou des conduite(s) d'alimentation (36) s'effectuant avec la ou les conduite(s) de sortie (38) par rotation du ou des rotor(s) (15),
**caractérisé en ce que** le ou les tubes (12) présente(nt) sur au moins une partie de sa longueur une section transversale différente par rapport au reste du tube (12).

2. Aiguillage selon l'une revendications précédentes, **caractérisé en ce qu'**au moins un tube (12) est incurvé au moins partiellement.

3. Aiguillage selon la revendication 1 ou 2, **caractérisé en ce que** la section transversale est différente dans une zone centrale (22) du ou des tube(s) (12) par rapport au reste de ce ou ces tubes (12).

4. Aiguillage selon l'une des revendications précédentes, **caractérisé en ce que** la section transversale différente du ou des tube(s) (12) est ovale ou elliptique.

5. Aiguillage selon la revendication 3 ou 4, **caractérisé en ce que** la zone centrale (22) du ou des tube(s) (12) s'étend à partir du milieu du ou des tube(s) (12) respectivement sur un tronçon d'essentiellement 0 à 50%, de préférence de 10 à 30% et plus préférentiellement de 20% par rapport à la longueur du ou des tube(s) (12) vers l'extrémité respective du ou des tube(s) (12).

6. Aiguillage selon l'une des revendications 3 à 5, **caractérisé en ce que** la largeur (34) du ou des tube(s) (12) est plus petite dans la zone centrale (22) du ou des tube(s) (12) qu'aux extrémités du ou des tube(s) (12).

7. Aiguillage selon l'une des revendications 3 à 6, **caractérisé en ce que** la section transversale dans la zone centrale (22) du ou des tube(s) (12) est ovale ou elliptique.

8. Aiguillage selon l'une des revendications précédentes, **caractérisé en ce que** la surface de la section transversale (40) du ou des tube(s) (12) est constante sur toute la longueur du ou des tube(s) (12).

9. Aiguillage selon l'une des revendications précédentes, **caractérisé en ce que** les tubes (12) sont disposés à l'intérieur du rotor (15) les uns à côté des autres sur un plan, de telle sorte que le tube (12) ayant la courbure la plus petite s'étend pour l'essentiel le long d'un diamètre (18) du rotor (15) et la courbure des autres tubes (12) augmente avec la distance par rapport au tube (12) ayant la plus petite courbure.

10. Aiguillage selon l'une des revendications 2 à 9, **caractérisé en ce qu'**au moins un autre tube (26) est prévu, lequel est disposé perpendiculaire au tube (12) ayant la plus petite courbure.

11. Aiguillage selon l'une des revendications précédentes, **caractérisé en ce qu'**au moins un système d'entraînement en rotation (28) du rotor (15) est prévu.
